# EUROPÄISCHE PATENTSCHRIFT

(11) **EP 3 077 241 B1**
(45) Veröffentlichungstag und Bekanntmachung des Hinweises auf die Patenterteilung: **04.04.2018**
(21) Anmeldenummer: 14809336.2
(22) Anmeldetag: 02.12.2014
(51) Int. Cl.: B60K 7/00, B60L 11/18

(54) **EINZELRADANTRIEB FÜR KRAFTFAHRZEUGE MIT BRENNSTOFFZELLE ODER FLOW-BATTERIE**
INDIVIDUAL WHEEL DRIVE FOR MOTOR VEHICLES WITH A FUEL CELL OR FLOW BATTERY
ENTRAINEMENT DE ROUE INDIVIDUEL POUR VÉHICULES AUTOMOBILES ÉQUIPÉS D'UNE PILE À COMBUSTIBLE OU D'UNE BATTERIE À FLUX

(30) Priorität: 05.12.2013 CH 20122013
(43) Veröffentlichungstag der Anmeldung: 12.10.2016
(73) Patentinhaber: Riegel, Jürgen, 6614 Brissago (CH)
(72) Erfinder: Riegel, Jürgen, 6614 Brissago (CH)
(74) Vertreter: Rentsch Partner AG
(86) Internationale Anmeldenummer: PCT/EP2014/076190
(87) Internationale Veröffentlichungsnummer: WO 2015/082442

(56) Entgegenhaltungen:
- WO-A2-2004/102695
- DE-A1-102007 034 700
- US-A- 5 389 824
- US-A1- 2010 133 029
- US-A1- 2011 174 561

## Beschreibung

### Hintergrund, Stand der Technik

Nach derzeitigem Stand der Technik werden Kraftfahrzeuge - beispielsweise Personenkraftwagen und Lastkraftwagen - fast ausschliesslich mit Verbrennungsmotoren angetrieben. Die eingesetzten Kraftstoffe, wie Benzin, Diesel, Erdgas, werden überwiegend aus fossilen Brennstoffen gewonnen.

Da die Ressourcen fossiler Brennstoffe, wie Erdöl, Erdgas, Steinkohle und Braunkohle, begrenzt sind und in absehbarer Zeit nicht mehr in ausreichender Menge zur Verfügung stehen werden, ist es allgemeines Bestreben, den spezifischen Kraftstoffverbrauch (Kraftstoffverbrauch pro Kilometer) zu reduzieren bzw. einen Ersatz für die beschränkten Ressourcen fossiler Brennstoffe zu finden.

Eine weitere Problematik von Kraftfahrzeugen betrifft die schon heute zu hohe und zukünftig noch stark steigende Umweltbelastung. Vor allem Ballungsgebiete und schnell wachsende Städte in Schwellenländern leiden unter zunehmender Smog-Atmosphäre.

Zu den Bemühungen der Automobilindustrie, einerseits den spezifischen Verbrauch fossiler Kraftstoffe zu reduzieren, andererseits die Umweltbelastung zu vermindern, gehören:
1. Entwicklung effizienterer Verbrennungsmotoren;
2. Einführung von batteriebetriebenen Elektroautos;
3. Einführung von Hybridantrieben, bestehend aus einem Verbrennungs- und einem Elektromotor;
4. Einsatz von Kraftstoffen aus nachwachsenden Rohstoffen;
5. Mit Wasserstoff betriebene Verbrennungsmotoren;
6. Mit Wasserstoff betriebene Brennstoffzellen zur Stromproduktion für Elektromotoren.

### Beschreibung der Erfindung

Zu diesen Bemühungen lässt sich nach derzeitigem Stand zusammenfassend folgendes feststellen:
*Zu 1*: In den letzten Jahren ist es gelungen, effizientere Verbrennungsmotoren zu entwickeln, so dass der Kraftstoffverbrauch je Kilometer stark gesunken ist. Dies reicht aber nicht aus, den globalen Bedarf fossiler Brennstoffe zu reduzieren, wenn man die erwartete Zunahme der zugelassenen Kraftfahrzeuge weltweit in die Betrachtung mit einbezieht.
*Zu 2*: Kraftfahrzeuge ausschliesslich mit einem batteriebetriebenen Elektromotor auszurüsten, hat den Vorteil, dass am Ort der Nutzung keine Emissionen entstehen. Diese sind an den Kraftwerksstandort zur Stromproduktion vorverlagert. Berücksichtigt man, dass heute noch der Strom zum Antrieb eines Elektroautos überwiegend durch den Einsatz fossiler Brennstoffe gewonnen wird, so stellen batteriebetriebene Elektroautos insgesamt keine ökologisch "saubere" Lösung dar beziehungsweise bewirken aus ökologischer Sicht eine lediglich geringfügige Verbesserung.

Mit der aufgeladenen Batterie eines Elektroautos kann derzeit eine Fahrstrecke von rund 150 km zurückgelegt werden, dann ist die Batterie leer, und sie muss wieder aufgeladen werden, was typischerweise mehrere Stunden dauert.

Zwar kann das batteriebetriebene Elektroauto als Stadtauto aus lokalen Emissionsgründen eine gewisse Bedeutung erlangen. Es scheint aber aus den dargestellten Gründen insgesamt nicht geeignet, den generellen Ansprüchen an ein modernes Transportsystem gerecht zu werden. Darüber hinaus stellen das Gewicht und die Anschaffungskosten der Batterie ein weiteres Problem dar, das gegen diese Antriebsform spricht. Grundsätzlich kann die Elektrifizierung der Antriebe aus ökologischer jedoch als Schritt in die richtige Richtung angesehen werden.

*Zu 3:* Der Hybridantrieb aus Elektro- und Verbrennungsmotor kann zwar den Nachteil kurzer Reichweite ausgleichen, muss aber teuer erkauft werden, ohne die anderen oben genannten Nachteile von Elektro- oder Verbrennungsmotoren zu vermeiden.

*Zu 4*: Kraftstoffe, die aus nachwachsenden Rohstoffen, wie z.B. Mais oder Raps, produziert werden, besitzen nur eine Randfunktion. Sie werden insbesondere vielfach als problematisch angesehen und auch von der Öffentlichkeit grösstenteils abgelehnt, weil diese Rohstoffe auch als Nahrungsmittel verwendet werden können. Diese Kraftstoffe müssen ferner aus technischen Gründen mit dem Kraftstoff aus fossilem Brennstoff gemischt werden, wobei der Anteil des Kraftstoffs aus nachwachsenden Rohstoffen höchstens 10 % betragen sollte. Damit ist der Beitrag, den sie zur Minderung oder Lösung der eingangs genannten Probleme beitragen können, vergleichsweise gering.

*Zu 5*: Wasserstoffbetriebene Verbrennungsmotoren tragen zur Lösung des Emissionsproblems in den Städten bei. Als Abgas entsteht hier unschädlicher Wasserdampf. Auftretende Stickoxide, die unter anderem Ursache des sogenannten sauren Regens sind, können durch einen nachgeschalteten Katalysator in elementaren Stickstoff und Wasser umgewandelt werden, die keine Belastung der Umwelt darstellen.

Wird der Wasserstoff mithilfe von Verfahren gewonnen, die zu keiner Umweltbelastung führen, besitzt dieser Lösungsansatz somit ökologische Vorteile gegenüber Treibstoffen, die aus Kohlenwasserstoffverbindungen bestehen.

Aufgrund der hohen Anschaffungskosten werden sich jedoch Fahrzeuge, bei denen Wasserstoff als Treibstoff im Verbrennungsmotor eingesetzt wird, erwartungsgemäss nicht auf breiter Basis durchsetzen können.

*Zu 6*: Wird Wasserstoff in einer Brennstoffzelle eingesetzt, um Strom für ein Elektroauto zu produzieren, können bestehende Umweltprobleme reduziert werden.

Damit sich die Brennstoffzelle mit einem Elektromotor als Antriebsaggregat am Markt flächendeckend durchsetzen kann, sind insbesondere folgende Bedingungen zu erfüllen:
- vergleichbare Anschaffungs- und Betriebskosten zu Kraftfahrzeugen mit Verbrennungsmotoren;
- wirtschaftliche und umweltverträgliche Herstellung von Wasserstoff;
- flächendeckendes Wasserstoffnetz.

Diese Rahmenbedingungen sind derzeit noch nicht erfüllt. Der ökologische und ökonomische Nutzen des Brennstoffzellenautos steht und fällt mit einem Überangebot des sogenannten "grünen Stroms", d. h. ohne Umweltbelastung produzierter elektrischer Energie.

Nach derzeitigem Stand der Technik ist ferner die Energiebilanz von Wasserstoffautos unbefriedigend. Wasserstoff muss, soll er klimaneutral sein, zunächst mit Öko-Strom aus Wasser abgespalten werden, dann transportiert, auf den hohen Druck von typisch 700 bar verdichtet, im Auto von der Brennstoffzelle wieder in Strom verwandelt und dann erst in Fortbewegung umgesetzt werden. Auf diesem Weg gehen etwa 70 Prozent der Energie verloren. Bei einem Batterieauto, das langsam und damit stromsparend aufgeladen wird, beträgt der Wirkungsgrad dagegen mehr als 70 Prozent. Dieser Vorteil des Batterieautos kommt jedoch nicht zum tragen, solange es kein für den Alltagseinsatz vollwertiges und langstreckentaugliches Auto ist.

Um ein flächendeckendes Wasserstoffnetz wirtschaftlich betreiben zu können, muss, ebenso wie beim Batterieauto, ökologisch, d. h. ohne bzw. mit geringer Umweltbelastung produzierter Strom (Öko-Strom, grüner Strom) kostengünstig und in erheblichem Umfang vorhanden sein. Es bestehen Zweifel, ob es in absehbarer Zeit gelingen wird, Öko-Strom in der erforderlichen Menge bereitstellen zu können. Entsprechend wenig ausgebaut ist derzeit die Infrastruktur für diesen Kraftstofftyp.

Sobald Wasserstoff im erforderlichen Umfang wirtschaftlich und umweltverträglich produziert werden kann und sich gleichzeitig ein Markt für den Einsatz von Wasserstoff abzeichnet, ist damit zu rechnen, dass sich auch der Ausbau eines flächendeckenden Wasserstoffnetzes zügig entwickeln wird.

Es ist eine Aufgabe der vorliegenden Erfindung, angesichts der derzeitigen und in ihre Dringlichkeit noch zunehmenden Probleme bei der Nutzung fossiler Brennstoffe zumindest als Brückentechnologie und gegebenenfalls auch darüber hinaus eine Technologie für den Antrieb von Kraftfahrzeugen bereitzustellen, die die Nachteile von mit fossilen Brennstoffen betriebenen Fahrzeugen vermeidet oder zumindest reduziert.

Die gattungsgemäße US 5389824 A offenbart ein Kraftfahrzeug mit jeweils einem Antriebsmotor pro Rad. Eine Hauptenergiequelle kann beispielsweise eine Redox-Batterie umfassen. Das Fahrzeug weist ferner eine 12V-Hilfsenergiequelle auf, welche Hilfseinrichtungen wie Scheibenwischer, Audiosystem sowie Instrumentenbeleuchtungen versorgt.

Die Aufgabe wird insbesondere durch den Gegenstand der unabhängigen Patentansprüche gelöst. Beispielhafte sowie besonders vorteilhafte Ausführungsformen werden durch die abhängigen Patentansprüche sowie die Offenbarung dieses Dokuments in seiner Gesamtheit definiert.

Gemäss einem ersten Aspekt wird die Aufgabe durch ein Verfahren zum Antrieb von Kraftfahrzeugen, beispielsweise von Personen- und Lastkraftwagen, gelöst. Das Verfahren umfasst eine Produktion von elektrischer Energie zum Antrieb des Kraftfahrzeugs mittels einer Flow-Batterie. Das Verfahren umfasst ferner einen separaten Antrieb jedes Rades des Kraftfahrzeugs mit einem separaten Elektromotor, wobei die separaten Elektromotoren mit der in der Flow-Batterie produzierten elektrischen Energie versorgt werden.

Gemäss einem weiteren Aspekt wird die Aufgabe durch ein Antriebssystem zum Einzelradantrieb von Kraftfahrzeugen, beispielsweise von Personen- und Lastkraftwagen, gelöst. Das Antriebssystem umfasst eine Vorrichtung zur Produktion von elektrischer Energie zum Antrieb des Kraftfahrzeugs, wobei es sich bei der Vorrichtung zur Produktion von elektrischer Energie um eine Flow-Batterie handelt. Das Antriebssystem umfasst ferner je einen separaten Elektromotor zum Antrieb jedes Rades, wobei die Elektromotoren mit der Vorrichtung zur Produktion elektrischer Energie verbunden sind.

Das vorgeschlagene Verfahren sowie das vorgeschlagene Antriebssystem lassen sich, in ansonsten grundsätzlich gleicher Weise anstatt mit einer Flow-Batterie auch mit einer Brennstoffzelle als Energiequelle umsetzen.

Dies ist neben Spezialanwendungen insbesondere dann sinnvoll, wenn ein flächendeckendes Wasserstoffnetz verfügbar und zudem eine wirtschaftliche Herstellung von Wasserstoff gewährleistet ist, damit ein Kraftfahrzeug mit diesem selektiven Antriebssystem in Bezug auf die Anschaffungs- und Betriebskosten mit konventionellen Kraftfahrzeugen vergleichbar ist.

Wie bereits dargestellt, sind diese Voraussetzungen hinsichtlich des praktischen Einsatzes von Wasserstoff derzeit nicht erfüllt und werden nach derzeitigen Schätzungen frühestens in einem Zeitraum von etwa 20 Jahren erfüllt sein. Daher kann anstelle einer wasserstoffbetriebenen Brennstoffzelle ein anderes Verfahren zur Stromproduktion im Kraftfahrzeug als Brückentechnologie genutzt werden. Die sogenannte Flow-Batterie, die eine Kombination aus einer Brennstoffzelle und einer Batterie darstellt, stellt eine erfindungsgemässe Alternative zur wasserstoffbetriebenen Brennstoffzelle dar und kann als Energielieferant in einem zum zuvor dargestellten Antriebssystem ansonsten grundsätzlich gleichartig aufgebauten Antriebssystem eingesetzt werden.

Angesichts einer weitgehend parallelen Umsetzung mittels Brennstoffzelle oder Flow-Batterie sowie der grundsätzlich guten Bekanntheit von Brennstoffzellen erfolgt die Darstellung von Vorteilen und Ausführungsformen der Erfindung zunächst im wesentlichen anhand von Brennstoffzellen. Anschließend wird speziell auf den Einsatz einer Flow-Batterie eingegangen, wobei wesentliche Aspekte und insbesondere erfindungsgemäße Vorteile weitgehend übereinstimmen.

Ein Antriebssystem der hier vorgeschlagenen Art ist gegenüber konventionellen Antriebssystemen entsprechend dem Stand der Technik vorteilhaft, wobei Probleme bekannter Antriebskonzepte reduziert oder vollständig behoben werden. Insbesondere sind folgende Aspekte bemerkenswert:
Durch die Kombination aus elektrischen Einzelradantrieb und einer mit Wasserstoff betriebenen Brennstoffzelle zur Stromproduktion wird kein fossiler Kraftstoff mehr benötigt, sofern zur Herstellung des Wasserstoffs "grüner Strom" in ausreichender Menge zur Verfügung steht. Die ökologischen Vorteile dieses Antriebssystems gegenüber einem Verbrennungsmotor sind signifikant.

Die Reichweite, die mit einem mit Wasserstoff gefüllten Tank zurückgelegt werden kann, liegt wesentlich über der Reichweite, die mit einem konventionellen Verbrennungsmotor zurückgelegt werden kann. Verglichen mit einem batteriebetriebenen Elektroauto wird eine vielfache Reichweite erzielt. Mit einem gefüllten Wasserstofftank, der den Abmessungen eines normalen Kraftstofftanks entspricht, kann eine Fahrleistung erbracht werden, die ein Kraftfahrzeug mit Verbrennungsmotor mit 180 Liter Benzin zurücklegt. Dabei beträgt das Gewicht des komprimierten Wasserstoffs nur rund 10% des Gewichts des herkömmlichen Kraftstoffs.

Wesentliche Aggregate eines konventionellen Kraftfahrzeugs, wie Verbrennungsmotor mit Kühler, Getriebe, Differential, Lichtmaschine und Antriebswelle, werden bei einem elektrischen Einzelradantrieb nicht benötigt. Damit sind günstige Herstell- und Betriebskosten sowie niedrige Wartungs- und Reparaturaufwendungen verbunden. Hierdurch sind die wirtschaftlichen Voraussetzungen erfüllt, entsprechende Kraftfahrzeuge im Gegensatz zu derzeitigen Nischenprodukten auf breiter Basis anzubieten.

Wesentliche Vorteile eines batteriebetriebenen Elektrofahrzeugs gegenüber einem Fahrzeug mit Verbrennungsmotor, wie
- keine Geräusche,
- hohes Drehmoment,
- Wartungsfreundlichkeit,
- geringere Emissionen
werden auch bei dem hier vorgeschlagenen Antriebssystem erreicht. Typische Nachteile bisheriger Elektroautos, wie
- Stromproduktion aus fossilen Brennstoffen,
- Mangelnde Alltagstauglichkeit bei bestehender Batterietechnologie, vor allem geringe Reichweite und lange Aufladezeit
treten bei dem hier vorgeschlagenen selektiven elektrischen Antriebssystem nicht oder nur in geringerem Umfang auf.

In einer exemplarischen Ausführungsform mit einer Brennstoffzelle verfügt diese über mindestens einen Wasserstofftank, der aus einem hochstabilen Material, wie z.B. Kohlenstofffasern, besteht. Dieser Wasserstofftank ist so konstruiert, dass ein unkontrolliertes Entweichen des Wasserstoffs ausgeschlossen ist.

300 Liter Wasserstoff wiegen ca. 16 kg und entsprechen 180 Liter konventionellem Kraftstoff. Bei einem Druck von 350 bar ist der Wasserstofftank in seinen Abmessungen mit einem normalen Kraftstofftank vergleichbar. Dank des hohen Drucks werden zum Betanken des Wasserstofftanks nur wenige Minuten benötigt. Der Wasserstofftank ist zweckmässiger Weise für einen Betriebsdruck im genannten Bereich ausgelegt.

Um die Risiken weiter zu minimieren, die im Zusammenhang mit dem Wasserstofftank grundsätzlich gesehen werden könnten, kann ein doppelwandiger Tank eingesetzt werden. Der Raum zwischen beiden Tankwänden sollte nach aussen entlüftet werden. Bei einem möglichen Leck des Innentanks würde der unkontrolliert austretende Wasserstoff sofort in die Atmosphäre gelangen.

In einer Ausführungsform umfasst das vorgeschlagene Verfahren eine Regelung der Elektromotoren je nach Beanspruchung des Kraftfahrzeugs. Insbesondere kann das Verfahren beispielsweise eine separate Regelung der einzelnen Elektromotoren umfassen. Ein beispielhaftes Antriebssystem kann eine elektronische Regeleinrichtung zur separaten und/oder gruppenweisen Regelung der Elektromotoren je nach Beanspruchung des Kraftfahrzeugs umfassen.

Insbesondere kann das Verfahren eine elektronische Steuerung der einzelnen Elektromotoren und damit des Kraftfahrzeugs erlauben. Dabei ist es möglich, die einzelnen Elektromotoren gruppenweise oder vollständig separat zu regeln und anzutreiben. Je nach Anforderung können dadurch entweder die Vorderräder, die Hinterräder oder alle Räder gleichzeitig angetrieben werden.

Der Antrieb von Fahrzeugen mit Einzelradantrieb und Brennstoffzellen als Energielieferant ist aus dem Stand der Technik grundsätzlich bekannt, insbesondere für landwirtschaftliche Fahrzeuge und Maschinen. Ein hierfür bekanntes Verfahren setzt voraus, dass die Räder dieses landwirtschaftlichen Fahrzeugs mit Reifen grossen Durchmessers und grosser Breite ausgerüstet sind, weil in jedem einzelnen Rad eine Brennstoffzelle als Stromlieferant und ein Transversal-Flux-Motor zum Antrieb dieses Rades untergebracht sind. Für den Einsatz in anderen Kraftfahrzeugen, insbesondere z. B. Personenkraftwagen, ist dieser spezielle auf landwirtschaftliche Fahrzeuge ausgerichtete Ansatz nicht geeignet.

Der hier vorgeschlagene selektive Einzelradantrieb soll auch und vor allem bei Personenkraftwagen mit in diesem Bereich üblichen Rad- und Reifenabmessungen eingesetzt werden. Das Fahrzeug besitzt eine zentrale Brennstoffzelle oder Flow-Batterie als Stromlieferant für alle Elektromotoren. Die Brennstoffzelle sollte dabei zweckmässig nicht im Peripheriebereich des Fahrzeugs, sondern unter Berücksichtigung einer konstruktiv und fahrtechnisch optimalen Gewichtsverteilung platziert werden. Auf jeder Achse befindet sich ein Elektromotor, der mit Strom aus der gemeinsamen Brennstoffzelle oder Flow-Batterie gespeist wird und das jeweilige Rad antreiben kann.

Der hier vorgeschlagene Einzelradantrieb wird bevorzugt nur in Ausnahmefällen als Allradantrieb genutzt. Aufgrund der allgemeinen Strassen- und Witterungsverhältnisse kann davon ausgegangen werden, dass das Fahrzeug zumeist über die beiden Vorder- oder die beiden Hinterräder angetrieben wird. Bei Schnee- und Eisverhältnissen sowie bei Einsatz des Fahrzeuges in schwer zugänglichem Gelände kann der Einzelradantrieb jedoch durch entsprechende Ansteuerung der Elektromotoren als Allradantrieb genutzt werden.

In einer Ausführungsform umfasst das Verfahren eine Pufferung von Schwankungen zwischen der Produktion elektrischer Energie und dem Strombedarf der Elektromotoren über ein zusätzliches Energiespeichersystem, insbesondere eine Batterie oder einen Akku. In einer entsprechenden Ausführungsform des Antriebssystems umfasst dieses ein zusätzliches Energiespeichersystem, insbesondere eine Batterie oder einen Akku, zur Pufferung von Schwankungen zwischen der Produktion elektrischer Energie und dem Strombedarf der Elektromotoren.

Hierdurch läst sich eine besonders gleichmässige und damit effiziente Stromproduktion durch die Brennstoffzelle oder Flow-Batterie erreichen. Dabei wird produzierte elektrische Energie in dem zusätzlichen Energiespeichersystem gespeichert. Die einzelnen Elektromotoren beziehen den benötigten Strom aus diesem Speichersystem, das eine Pufferfunktion übernimmt und eine möglichst konstante Stromproduktion durch die Brennstoffzelle oder Flow-Batterie ermöglicht, selbst wenn der Strombedarf schwankt. Erfindungsgemäss umfasst das Verfahren die vorübergehende Versorgung der Elektromotoren mittels einer Starterbatterie, bis die Brennstoffzelle oder Flow-Batterie ihre volle Leistung erreicht. Als Starterbatterie kann zum Beispiel das zuvor erwähnte zusätzliche Energiespeichersystem dienen, welches zugleich der Pufferung dient. Das Antriebssystem umfasst eine separate Starterbatterie zur vorübergehenden Versorgung der Elektromotoren, bis die Brennstoffzelle oder Flow-Batterie ihre volle Leistungsfähigkeit erreicht.

In Ausführungsformen der zuvor beschriebenen Art mit einem zusätzlichen Energiespeichersystem und/oder einer Starterbatterie wird deren Ladezustand in einer beispielhaften Ausführungsform automatisch kontrolliert. Liegt dieser unter einem vorgegebenen Niveau, wird die Flow-Batterie oder Brennstoffzelle erst dann automatisch abgeschaltet, wenn ein vorgegebener Ladezustand erreicht worden ist. Damit ist ein problemloser Neustart des Fahrzeugs immer gewährleistet. Alternativ oder zusätzlich kann eine Ladung des zusätzlichen Energiespeichersystems und/oder der Starterbatterie auch aus dem öffentlichen Netz erfolgen, wofür das Antriebssystem eine entsprechende Schnittstelle, beispielsweise in Form einer Steckdose und einer entsprechenden Konverterschaltung, umfassen kann.

Beim Einsatz einer Brennstoffzelle wird diese typischerweise mit Luft und nicht mit reinem Sauerstoff betrieben. Daher können bei der Stromproduktion neben Wasserdampf auch Stickoxide (NOx) anfallen. Da Stickoxide die Umwelt belasten, kann die Brennstoffzelle zweckmässiger Weise mit einem Katalysator ausgerüstet werden.

In einer Ausführungsform umfasst das Verfahren beim Bremsen eine Umwandlung kinetischer Energie in elektrische Energie (Überschuss-Energie), sowie ein Speichern der elektrischen Überschuss-Energie und einen nachfolgenden Einsatz der elektrischen Überschuss-Energie zum Antrieb des Kraftfahrzeugs. Hierdurch ergibt sich eine weitere Optimierung des erfindungsgemässen Antriebssystems. Das Speichern dieser Energie kann beispielsweise durch das im Zusammenhang anderer Ausführungsformen erwähnte zusätzliche Energiespeichersystem erfolgen. Ein entsprechendes Antriebssystem ist Umwandlung von kinetischer Energie in elektrische Überschuss-Energie beim Bremsen des Kraftfahrzeuges sowie zum Speichern der elektrischen Überschuss-Energie und zu einem nachfolgenden Einsatz der elektrischen Überschuss-Energie zum Antrieb des Kraftfahrzeugs ausgelegt.

Mit einem erfindungsgemässen Verfahren bzw. bei Einsatz eines erfindungsgemässen Antriebssystems werden weder ein Verbrennungsmotor mit Kühler noch ein Getriebe, eine Antriebswelle, ein Differential und eine Lichtmaschine benötigt. Es muss nur gewährleistet sein, dass das Kraftfahrzeug vorwärts, rückwärts und im Leerlauf betrieben werden kann. Ferner kann durch entsprechende Steuerung bzw. Regelung der Elektromotoren ein Allradantrieb ohne Zusatzausrüstung gewährleistet werden.

Insbesondere in Hinblick auf die Nutzung als Brückentechnologie ist der Einsatz einer Flow-Batterie anstelle einer Brennstoffzelle vorteilhaft. Die Flow-Batterie speichert elektrische Energie in chemischen Verbindungen, indem die Reaktionspartner in einem Lösungsmittel in gelöster Form vorliegen. Dabei zirkulieren zwei energiespeichernden Elektrolyte in zwei getrennten Kreisläufen, zwischen denen in der Zelle mittels einer Membran der Ionenaustausch erfolgt.

Die Elektrolyt besteht aus in einem Lösungsmittel gelösten Salzen. Als Lösungsmittel werden entweder anorganische oder organische Säuren verwendet. Als verwendbare Redox-Paare sind Verbindungen aus Titan, Eisen, Chrom, Vanadium, Cer, Zink, Brom und Schwefel bekannt.

Die Flow-Batterie kann derzeit Leistungen von einem Kilowatt bis zu mehreren Megawatt bereitstellen. Im Vergleich zu anderen Speichertechnologien hat sie einen hohen Wirkungsgrad, eine gute Vermeidbarkeit von Selbstentladung und eine hohe Lebenserwartung. Letztere basiert darauf, dass das Elektrodenmaterial bei der Reaktion des Elektrolyten selber chemisch nicht reagiert und damit nicht degeneriert.

Dabei besitzt die Flow-Batterie typischerweise eine zentrale Reaktionseinheit in Form einer Kammer, eines Tanks, etc. welche eine mit Katalysatoren besetzte und für Protonen durchlässige Membran in zwei Hälften geteilt ist. In der einen Hälfte befindet sich die positive Elektrode (Kathode), in der anderen Hälfte die negative Elektrode (Anode).

Wird eine Stromquelle an die Plus- und Minuselektrode angelegt, nehmen die Ionen in einem Tank Elektronen auf, es kommt zu einer Reduktion. Die Ionen in dem anderen Tank geben Elektronen ab, es kommt zu einer Oxidation, woraus sich die ebenfalls übliche Bezeichnung ""Redox-Flow-Batterie" ableitet. Beim Entladen der Flow-Batterie läuft der Prozess umgekehrt ab. Aus diesem Zusammenhang ergibt sich, dass eine Flow-Batterie wie ein Akkumulator konventioneller Bauart mittels einer Stromquelle als Ladeeinrichtung geladen werden kann. Alternativ oder zusätzlich können die Elektrolyt-Lösungen ausgetauscht werden.

Beim hier vorgeschlagenen Einsatz einer Flow-Batterie fallen im Gegensatz zur Brennstoffzelle keine Schadstoffe oder umweltbelastende Emissionen an.

Die Herstellung, das Handling und der Transport der verschiedenen Elektrolyte sind technisch unproblematisch. Die zur Herstellung der Elektrolyte und der Metallsalze benötigten Rohstoffe unterliegen keinen Beschränkungen und sind, soweit absehbar, auch zukünftig verfügbar. Die Elektrolyte können beispielsweise mit Tankwagen oder auch mittels Pipelines/Rohrleitungen transportiert werden.

Bei der Flow-Batterie wird die Batterieleistung wesentlich durch die zentrale Reaktionseinheit und die Kapazität der Batterie durch die Tankauslegung bestimmt. Sie können daher je nach Anforderung getrennt festgelegt werden.

Ein wesentlicher Vorteil der Flow-Batterie im Vergleich zu einer Brennstoffzelle besteht vor allem darin, dass die Elektrolyte unbrennbar sind und ohne Überdruck bei Normaltemperatur im jeweiligen Tank gelagert werden kann, während der in der Brennstoffzelle eingesetzte Wasserstoff hochexplosiv ist.

Da der aufgeladene positive und negative Elektrolyt in separaten Tanks gelagert werden, ist ferner selbst bei langer Lagerung eine Selbstentladung des Elektrolyt ausgeschlossen.

Zur Inbetriebnahme bzw. zum Starten der Flow-Batterie ist nur die Inbetriebnahme von typischerweise vorhandenen zwei Pumpen notwendig, um den negativen bzw. positiven Elektrolyt durch den jeweiligen Bereich der Reaktionseinheit zu zirkulieren.

In einigen Ausführungsformen mit einer Flow-Batterie ist die Flow-Batterie eine Vanadium-Flow-Batterie unter Einsatz von Elektrolyten mit unterschiedlich wertigem Vanadium.

Vanadium-Flow-Batterien besitzen eine Reihe von Eigenschaften, die im vorliegenden Anwendungsgebiet besonders vorteilhaft sind.

Selbst wenn der positive und der negative Elektrolyt miteinander gemischt werden, führt das nicht zu einer Reduzierung der Batteriekapazität.

Bei gleichgrosser Reaktionseinheit haben Vanadium-Flow-Batterien eine vergleichsweise hohe Leistung. Ein weiterer Vorteil von Vanadium-Flow-Batterien besteht darin, dass die eingesetzten Elektrolyte vollständig durch einen externen Recyclingprozess wieder regeneriert und damit ohne Verlust an Vanadium wieder verwendet werden können. Da Vanadium beliebigwertig eingesetzt werden kann, ist eine Effizienz dieses Elektrolyts von 75 bis 80 % zu erzielen. Als Lösungsmittel eignet sich Schwefelsäure.

Die Elektrodenreaktion des Vanadium-Systems kann folgendermassen dargestellt werden:
Beim Laden der Vanadium-Flow-Batterie werden in der Reaktionseinheit an der positiven Elektrode (Kathode) die vierwertigen Vanadium-Ionen (VO²⁺) in fünfwertige Vanadium-Ionen (VO₂⁺) bei Anwesenheit von Wassermolekülen oxidiert, während an der negativen Elektrode (Anode) dreiwertige Vanadium-Ionen (V³⁺) zu zweiwertigen Vanadium-Ionen (V²⁺) reduziert werden. Während des Ladevorgangs sammeln sich die Wasserstoff-Ionen (H⁴) an der positiven Elektrode (Kathode) und fliessen durch die Membran zur negativen Elektrode (Anode), um die elektrische Neutralität des Elektrolyts aufrecht zu halten. Die beim Ladevorgang zugeführte Elektrizität wird durch die Transformation der Vanadium-Ionen mit unterschiedlichen Wertigkeiten gespeichert.

Beim Entladen wird die im Elektrolyt gespeicherte Elektrizität durch die umgekehrte Reaktion freigesetzt, d.h. an der positiven Elektrode (Kathode) werden die fünfwertigen Vanadium-Ionen (VO₂⁺) in vierwertige Vanadium-Ionen (VO₂⁺) reduziert, während an der negativen Elektrode (Anode) die zweiwertigen Vanadium-Ionen (V²⁺) zu dreiwertigen Vanadium-Ionen (V³⁺) oxidieren. Sind die beiden Elektrolytlösungen vollständig verbraucht, befinden sich in der einen Kammer die reduzierten vierwertigen Vanadium-Ionen (VO₂⁺) und in der anderen Kammer die oxidierten dreiwertigen Vanadium-Ionen (V³⁺).

Wie andere Flow-Batterieen enthält eine Vanadium-Flow-Batterie zwei Elektroden, die jeweils durch eine für Ionen durchlässige Membran getrennt sind. Durch eine leitende Verbindung zwischen den Elektroden kann Strom fliessen. Es wandeln sich zum Laden oder Entladen durch Elektronenübertragungsprozesse VO₂⁺-Ionen in VO²⁺-Ionen um. Sie geben die Elektronen an die Elektrode ab.

Auf der anderen Seite der Reaktionseinheit findet ein anderer Prozess statt. Hier laufen die Elektronenübertragungsschritte zwischen V²⁺-Ionen und V³⁺-Ionen ab. Dabei werden Elektronen von der Elektrode aufgenommen. Beim Entladen entsteht eine Spannung zwischen den Elektroden, und der Strom kann fliessen. Zuvor muss jedoch, zum Beispiel erzeugt durch überschüssige Energie aus erneuerbaren Quellen, das System geladen worden sein, damit die Prozesse in der umgekehrten Richtung ablaufen können.

Zwecks Ladungsausgleichs wandern Protonen durch die Membran. Damit auch immer genügend Metall-Ionen an den Elektroden zur Verfügung stehen, werden die flüssigen Elektrolyte entlang der Elektroden gepumpt. Die Elektrolyt-Tanks dienen als Speichermedium. Durch ihre Grösse lässt sich die gespeicherte Energiemenge steuern.

Wird anstelle der Brennstoffzelle eine Flow-Batterie eingesetzt, können laufende Schwankungen zwischen der elektrischen Energieproduktion und dem schwankenden Energiebedarf grundsätzlich auch ohne Pufferung gut ausgeglichen werden. Ein zusätzliches Energiespeichersystem, wie zuvor im Zusammenhang von Brennstoffzellen beschrieben, kann jedoch optional vorhanden sein. Insbesondere kann, um das Kraftfahrzeug jederzeit problemlos starten zu können, eine Starterbatterie vorgesehen werden, die die Regelungsaggregate der Flow-Batterie mit Strom versorgt, bis diese ihre volle Leistungsfähigkeit erreicht hat.

Anstelle des Wasserstofftanks der Brennstoffzelle werden bei der Flow-Batterie zwei Tanks für die beiden energiespeichernden Elektrolyte benötigt. Die hier eingesetzten flüssigen Elektrolyte sind, wie bereits dargestellt, unbrennbar und in ihrer Handhabung grundsätzlich unkritisch.

In einer Ausführungsform des Verfahrens umfass dieses einen Austausch von verbrauchtem Elektrolyt der Flow-Batterie durch ionisierten Elektrolyt. Dies kann in gleicher Form wie die Betankung konventioneller Kraftfahrzeuge mit Benzin- oder Dieselkraftstoff erfolgen. Die Elektrolyte können beispielsweise über das vorhandene Tankstellennetz vertrieben werden. Alternativ oder zusätzlich kann ein Ionisieren von verbrauchtem Elektrolyt mittels einer Ladevorrichtung. erfolgen. Ein entsprechendes Antriebssystem kann eine Elektrolyt-Austauschvorrichtung zum Austausch von verbrauchtem Elektrolyt und/oder eine Ladevorrichtung zur Ionisierung von verbrauchtem Elektrolyt umfassen.

### Ausführungsbeispiele

Nachfolgend werden beispielhafte Ausführungsformen der Erfindung mit zusätzlichem Bezug auf die Figuren dargestellt.
- Figur 1:: zeigt ein beispielhaftes Antriebssystem entsprechend der vorliegenden Offenbarung;
- Figur 2:: zeigt beispielhaft den Aufbau einer Flow-Batterie zur Verwendung in einem Antriebssystem gemäß Figur 1.

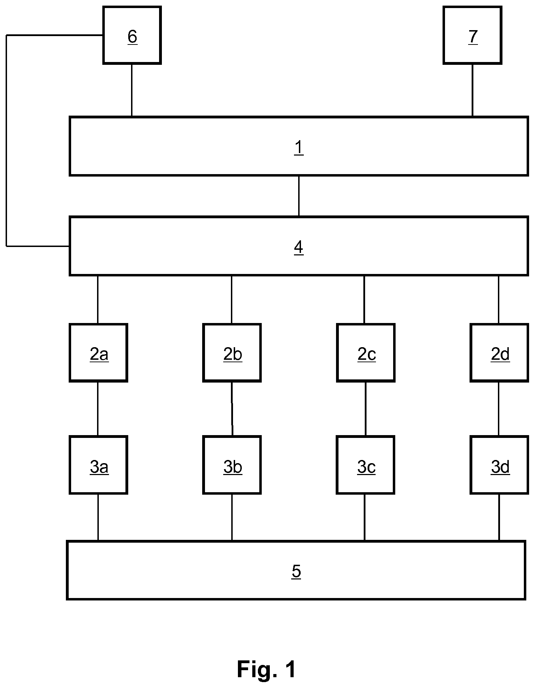

Figur 1 zeigt ein beispielhaftes Antriebssystem entsprechend der vorliegenden Offenbarung in einer schematischen strukturellen Darstellung. Das in Figur 1 dargestellten Antriebssystem eignet sich zur Durchführung eines offenbar ordnungsgemäßen Verfahrens zum Antrieb von Kraftfahrzeugen.

Das Antriebssystem umfasst eine Hauptenergiequelle 1, welche beispielhaft als Flow-Batterie, z. B. als Vanadium-Flow-Batterie ausgeführt ist. Alternativ könnte die Hauptenergiequelle 1 auch eine Brennstoffzelle sein.

Die Flow-Batterie 1 ist mit beispielhaft vier Elektromotoren 2a 2b, 2c, 2d verbunden, welche sie mit elektrischer Energie versorgt. Die vier Elektromotoren 2a,2b, 2c, 2d sind beispielhaft mit vier zugeordneten Rädern des Kraftfahrzeugs verbunden, welche sie antreiben. Die Versorgung der Elektromotoren 2a, 2b, 2c, 2d durch die Vanadium-Flow-Batterie 1 erfolgt in dieser Ausführungsform nicht direkt, sondern mittels eines zwischengeschalteten zusätzlichen Energiespeichersystems, das beispielhaft als auf aufladbare Batterie 4 konventioneller Bauart, beispielsweise als Lithium-Polymer-Batterie, ausgeführt ist. Die aufladbare Batterie 4 dient insbesondere als Puffer, und speichert beim Bremsen des Kraftfahrzeuges durch die Elektromotoren 2a,2b, 2c 2d - welche beim Bremsen als Generatoren wirken - zwischen. Daneben kann die aufladbare Batterie hier auch als Starterbatterie dienen, wie in der allgemeinen Beschreibung der Erfindung dargestellt.

Die beispielhaft vier Elektromotoren 2a, 2b, 2c, 2d sind jeweils mit einer zugeordneten elektronische Regler 3a, 3b, 3c, 3d operativ gekoppelt und werden durch diese separat angesteuert und geregelt. Die vier elektronischen Regler bilden in ihrer Gemeinschaft eine elektronische Regeleinrichtung.

In einer typischen beispielhaften Auslegung, für einen üblichen Personenkraftwagen der sog. "Mittelklasse" verfügt jede der vier Elektromotoren über eine Leistung von z. B. 30 kW. Die verfügbare Gesamtleistung beträgt in diesem Beispiel dann ca. 120 kW.

Die vier Regler 3a, 3b, 3c, 3d sind jeweils mit einer übergeordneten zentralen Antriebssteuerung 5 operativ gekoppelt und steuert diese entsprechend den Erfordernissen der jeweiligen Gesamtsituation, beispielsweise gewünschter Geschwindigkeit, Beschleunigungs- und/oder Bremsbefehlen, dem jeweiligen Untergrund, dem Ladezustand der Flow-Batterie 1 und/oder des zusätzlichen Energiespeichersystems 4 und/oder weiterer relevanter Parameter an.

Mittels der zentralen Antriebssteuerung 5 werden, ja nach Last- und Strassensituation, lediglich die Vorderräder, lediglich die Hinterräder oder alle vier Räder angetrieben. Die Umschaltung zwischen verschiedenen Antriebsarten kann dabei manuell und/oder teilautomatisch oder vollautomatisch erfolgen. Durch die direkte und unabhängige Kopplung der Elektromotoren mit den Rädern kann eine Änderung besonders vorteilhaft und dynamisch erfolgen. So ist es möglich, nur bei starkem Beschleunigen, z. B. bei einem Überholmanöver, kurzfristig und bevorzugt automatisch von einem Antrieb z. B. lediglich der Vorderräder auf Allradantrieb zu wechseln. Weitere Situationen, in denen ein kurzzeitiger und bevorzugt automatisch zugeschalteter Allradantrieb sinnvoll sein kann, sind das Bergauffahren mit grosser Steigung (z. B. steiler Strassen), das Fahren auf nassen Strassen mit der Gefahr von Aquaplaning, sowie das Fahren auf vereisten bzw. verschneiten Strassen. Das vorgeschlagene Antriebskonzept ist ferner in Hinblick auf die Energieeffizienz und damit die Reichweite vorteilhaft.

Das Antriebssystem umfasst typischerweise ferner Messwertaufnehmer/Sensoren (nicht dargestellt), die mit der zentralen Antriebssteuerung 5 und/oder den Reglern 3a,3b, 3c, 3d operativ gekoppelt sein könnten. Die zentrale Antriebssteuerung 5 ist ferner mit (nicht dargestellten) Bedienelementen, wie beispielsweise einem Gas- und einem Bremspedal operativ gekoppelt.

Das Antriebssystem enthält ferner beispielhaft eine (elektrische) Ladeeinrichtung 6, die mit der Flow-Batterie 1 operativ gekoppelt ist und ihrer Aufladung durch Ionisierung von verbrauchtem Elektrolyt dient.

In der dargestellten Ausführungsform ist die Ladevorrichtung 6 ferner optional mit der Batterie 4 operativ gekoppelt und ermöglicht so das Aufladen der Batterie 4. Alternativ kann zum Aufladen der Batterie 4 eine separate Ladevorrichtung vorhanden sein.

Die Ladevorrichtung 6 kann vollständig in das Kraftfahrzeug integriert und ein integraler Bestandteil davon sein. Sie kann jedoch ganz oder teilweise auch separat bereitgestellt werden, beispielsweise in einer Garage oder einer sonstigen (zum Beispiel öffentlichen) Ladestation und zum Laden mit dem Kraftfahrzeug beispielsweise über ein Kabel verbunden werden.

In der dargestellten Ausführungsform umfasst das Antriebssystem ferner beispielhaft eine mit der Flow-Batterie operativ gekoppelte Elektrolyt-Austauschvorrichtung 7 zum Austausch verbrauchten Elektrolyts mit frischem, ionisierten Elektrolyt. Die Elektrolyt-Austauschvorrichtung kann grundsätzlich vergleichbar der Tankeinrichtung eines konventionellen Kraftfahrzeugs mit Benzin- oder Dieselmotor aufgebaut sein und enthält typischerweise eine Tanköffnung und ein fluidisches Leitungssystem in Verbindung mit den Elektrolyttanks der Flow-Batterie 1. Neben dem Einfüllen frischen Elektrolyts dient die Elektrolyt-Austauschvorrichtung ferner zum vorgängigen Abpumpen des verbrauchten Elektrolyts. Abgepumptes Elektrolyt kann anschliessend mit Hilfe eines elektrischen Ladegerätes durch erneutes Ionisieren regeneriert werden.

Die Ladeeinrichtung 6 und die Elektrolyt-Austauschvorrichtung 7 stellen jeweils eine Einrichtung zum Aufladen der Flow-Batterie 1 dar, welche je nach vorhandener Infrastruktur und Situation alternativ genutzt werden können. Je nach vorgesehenen Einsatzbedingungen des Kraftfahrzeuges kann aber auch lediglich die Ladeeinrichtung 6 oder die Elektrolyt-Austauschvorrichtung 7 vorgesehen sein. Grundsätzlich ist es ferner möglich, die Flow-Batterie 1 austauschbar zu gestalten und dabei optional weder die Ladeeinrichtung 6 noch die Elektrolyt-Austauschvorrichtung 7 vorzusehen.

Wie bereits dargestellt, kann anstelle der Flow-Batterie 1 auch eine Brennstoffzelle eingesetzt werden, wobei die sonstige Anordnung der gezeigten Ausführungsform von Figur 1 weitgehend erhalten bleibt. Die Elektrolyt-Austauschvorrichtung 7 ist in diesem Fall nicht vorhanden.

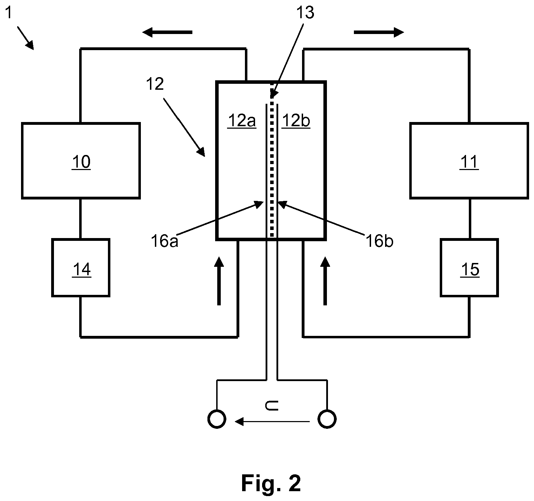

Nachfolgend wird zusätzlich auf Figur 2 Bezug genommen. Figur 2 zeigt eine Flow-Batterie 1, beispielsweise eine Flow-Batterie 1, die sich für den Einsatz in einem Antrieb gemäß Figur 1 eignet.

Die Flow-Batterie 1 umfasst zwei separate Tanks 10,11 für die beiden Elektrolyt-Lösungen. In einer beispielhaften Ausführungsform für einen Personenkraftwagen haben die beiden Tanks z. B. je ein Fassungsvermögen von 100 l. Die Flow-Batterie 1 umfasst ferner die zentrale Reaktionseinheit 12, welche durch eine katalysatorbesetzte und protonendurchlässige Membran 13 in zwei Kammern 12a, 12b unterteilt ist. Durch ein fluidisches Leitungssystem, typischerweise in Form von Rohren und/oder Schläuchen (nicht referenziert), ist der Tank 10 über eine erste Umwälzpumpe 14 mit der Kammer 1 2a zu einem geschlossenen Flüssigkeitskreislauf verbunden. In analoger Weise ist der Tank 11 über eine zweite Umwälzpumpe 15 mit der Kammer 1 2b zu einem geschlossenen Flüssigkeitskreislauf verbunden. Die Umwälzpumpen 14,15 gewährleisten im Betrieb eine kontinuierliche Erneuerung der Elektrolytlösungen in den Kammern 12a, 12b. Bis die Flow-Batterie 1 bei Inbetriebnahme die Versorgung der Umwälzpumpe 14,15 übernehmen kann, werden diese bevorzugt aus dem optionalen weiteren Energiespeichersystem 4 oder einer sonstigen Hilfsbatterie versorgt.

Die Flow-Batterie 1 umfasst ferner Elektroden 16a, 16b, welche in den Kammern 12a, 1 2b entlang der Membran 13 angeordnet sind. Die Elektroden 1 6a, 1 6b sind über elektrische Leitungen (nicht referenziert) aus der zentralen Reaktionskammer 12 herausgeführt und dienen dem elektrischen Anschluss der Flow-Batterie 1 beim Laden und Entladen.

Eine Elektrolyt-Austauschvorrichtung 7 gemäß Figur 1 ist optional fluidisch durch ein Leitungssystem an die Tanks 10,11 angeschlossen.

In einer beispielhaften Ausführungsform ist die Flow-Batterie 1 auf eine elektrische Nennspannung im Bereich von z. B. 600 V bei einem Nennstrom von 50 A ausgelegt.

In einem anzutreibenden Kraftfahrzeug erfolgt die Platzierung die Flow-Batterie 1 bevorzugt unter Berücksichtigung einer optimalen Gewichtsverteilung sowie der Zugänglichkeit zu Austausch- und/oder Wartungszwecken.

## Patentansprüche

1. Verfahren zum Antrieb von Kraftfahrzeugen, beispielsweise von Personen- und Lastkraftwagen, das Verfahren umfassend:
- eine Produktion von elektrischer Energie zum Antrieb des Kraftfahrzeugs mittels einer Flow-Batterie (1);
- einen separaten Antrieb jedes Rades des Kraftfahrzeugs mit einem separaten Elektromotor (2a, 2b, 2c, 2d), wobei die separaten Elektromotoren (2a, 2b, 2c, 2d) mit der in der Flow-Batterie (1) produzierten elektrischen Energie versorgt werden; **gekennzeichnet durch**
- ein vorübergehendes Versorgen der Elektromotoren mittels einer Starterbat terie, bis die Flow-Batterie (1) ihre volle Leistung erreicht.

2. Verfahren nach Anspruch 1, wobei die Produktion von elektrischer Energie mittels einer Vanadium-Flow-Batterie unter Einsatz von Elektrolyten mit unterschiedlich wertigem Vanadium erfolgt.

3. Verfahren nach einem der vorhergehenden Ansprüche, wobei das Verfahren eine Regelung der Elektromotoren (2a, 2b, 2c, 2d) je nach Beanspruchung des Kraftfahrzeugs umfasst.

4. Verfahren nach Anspruch 3, wobei das Verfahren eine separate Regelung der einzelnen Elektromotoren (2a, 2b, 2c, 2d) umfasst.

5. Verfahren nach einem der vorhergehenden Ansprüche, wobei das Verfahren eine Pufferung von Schwankungen zwischen der Produktion elektrischer Energie und dem Strombedarf der Elektromotoren über ein zusätzliches Energiespeichersystem, (4) insbesondere eine Batterie oder einen Akku, umfasst.

6. Verfahren nach einem der vorhergehenden Ansprüche, das Verfahren umfassend eine Umwandlung von kinetischer Energie in elektrische Überschuss-Energie beim Bremsen des Kraftfahrzeuges, sowie ein Speichern der elektrischen Überschuss-Energie und einen nachfolgenden Einsatz der elektrischen Überschuss-Energie zum Antrieb des Kraftfahrzeugs.

7. Verfahren nach einem der vorhergehenden Ansprüche, das Verfahren umfassen einen Austausch von verbrauchtem Elektrolyt der Flow-Batterie (1) durch ionisierten Elektrolyt und/oder ein Ionisieren von verbrauchtem Elektrolyt mittels einer Ladevorrichtung (6).

8. Antriebssystem zum Einzelradantrieb von Kraftfahrzeugen, beispielsweise von Personen- und Lastkraftwagen, das Antriebssystem umfassend:
- eine Vorrichtung zur Produktion von elektrischer Energie zum Antrieb des Kraftfahrzeugs, wobei es sich bei der Vorrichtung um eine Flow-Batterie (1) handelt;
- je einen separaten Elektromotor (2a, 2b, 2c, 2d) zum Antrieb jedes Rades, wobei die Elektromotoren mit der Vorrichtung zur Produktion elektrischer Energie verbunden sind; **gekennzeichnet durch**
- eine separate Starterbatterie zur vorübergehenden Versorgung der Elektro motoren, bis die Flow-Batterie ihre volle Leistungsfähigkeit erreicht.

9. Antriebssystem nach Anspruch 8, wobei die Flow-Batterie (1) eine Vanadium-Flow-Batterie mit unterschiedlich wertigem Vanadium umfasst.

10. Antriebssystem nach Anspruch 8 oder Anspruch 9, das Antriebssystem umfassend eine elektronische Regeleinrichtung (3a, 3b, 3c, 3d) zur separaten Regelung der Elektromotoren (2a, 2b, 2c, 2d) je nach Beanspruchung des Kraftfahrzeugs.

11. Antriebssystem nach einem der Ansprüche 8 bis 10, das Antriebssystem umfassend ein zusätzliches Energiespeichersystem (4), insbesondere eine Batterie oder einen Akku, zur Pufferung von Schwankungen zwischen der Produktion elektrischer Energie und dem Strombedarf der Elektromotoren.

12. Antriebssystem nach einem der Ansprüche 8 bis 11, wobei das Antriebssystem zur Umwandlung von kinetischer Energie in elektrische Überschuss-Energie beim Bremsen des Kraftfahrzeuges sowie zum Speichern der elektrischen Überschuss-Energie und zu einem nachfolgenden Einsatz der elektrischen Überschuss-Energie zum Antrieb des Kraftfahrzeugs ausgelegt ist.

13. Antriebssystem nach einem der Ansprüche 8 bis 12, das Antriebssystem umfassend eine Elektrolyt-Austauschvorrichtung (7) zum Austausch von verbrauchtem Elektrolyt und/oder eine Ladevorrichtung (6) zur Ionisierung von verbrauchtem Elektrolyt.

## Claims

1. Method for driving of motor vehicles, such as passenger and goods vehicles, the method comprising:
- a production of electrical energy for driving the motor vehicle by means of a flow battery (1);
- a separate drive for each wheel of the motor vehicle with a separate electric motor (2a, 2b, 2c, 2d), wherein the separate electric motors (2a, 2b, 2c, 2d) are supplied with the electrical energy produced in the flow battery (1)
**characterized by**
- a temporary supply of the electric motors by means of a starter battery until the flow battery (1) reaches its full output.

2. Method according to Claim 1, wherein electrical energy is produced by means of a vanadium flow battery using electrolytes with vanadium of various valencies.

3. Method according to any one of the preceding claims, wherein the method comprises controlling the electric motors (2d 2a, 2b, 2c) according to the load on the motor vehicle.

4. Method according to Claim 3, wherein the method comprises a separate control of the individual electric motors (2a, 2b, 2c, 2d).

5. Method according to any one of the preceding claims, wherein the method comprises buffering of fluctuations between the production of electrical energy and the electricity demand of the electric motors via an additional energy storage system (4), particularly a battery or rechargeable battery.

6. Method according to any one of the preceding claims, comprising a conversion of kinetic energy into surplus electrical energy during braking of the motor vehicle, and storing the surplus electrical energy and using the surplus electrical energy subsequently to drive the motor vehicle.

7. Method according to any one of the preceding claims, which method comprises an exchange of the consumed electrolyte of the flow battery (1) with ionized electrolyte and/or an ionization of consumed electrolyte by means of a charging device (6).

8. Drive system for driving individual wheels of motor vehicles, such as passenger and goods vehicles, the drive system comprising:
- a device for production of electrical energy for driving the motor vehicle, the device being a flow battery (1);
- a separate electric motor (2a, 2b, 2c, 2d) for driving each of the wheels, wherein the electric motors are connected to the device for producing electrical energy;
**characterized by**
- a separate starter battery for the temporary supply of the electric motors until the flow battery reaches its full output.

9. Drive system according to Claim 8, wherein the flow battery (1) comprises a vanadium flow battery with vanadium of various valencies.

10. Drive system according to Claim 8 or Claim 9, the drive system comprising an electronic control device (3a, 3b, 3c, 3d) for the separate control of the electric motors (2a, 2b, 2c, 2d) depending on the load on the motor vehicle.

11. Drive system according to any one of Claims 8 to 10, the drive system comprising an additional energy storage system (4), particularly a battery or a rechargeable battery, for buffering fluctuations between the production of electrical energy and the power consumption of the electric motors.

12. Drive system according to any one of Claims 8 to 11, wherein the drive system is designed to convert kinetic energy into surplus electrical energy during braking of the motor vehicle and to store the surplus electrical and for subsequent use of the surplus electrical energy for driving the motor vehicle.

13. Drive system according to any one of claims 8 to 12, the drive system comprising an electrolyte exchange device (7) for exchanging consumed electrolyte, and/or a charging device (6) for ionizing consumed electrolyte.

## Revendications

1. Procédé pour l'entraînement de véhicules automobiles, par exemple de véhicules automobiles de tourisme et poids lourds, le procédé comprenant :
- une production d'énergie électrique pour entraîner le véhicule automobile au moyen d'une batterie à flux (1),
- un entraînement séparé de chaque roue du véhicule automobile avec un moteur électrique séparé (2a,2b,2c,2d), les moteurs électriques séparés (2a,2b,2c,2d) étant alimentés par l'énergie électrique produite dans la batterie à flux (1), **caractérisé par**
- une alimentation provisoire des moteurs
électriques au moyen d'une batterie de démarrage jusqu'à ce que la batterie à flux (1) atteigne sa pleine puissance.

2. Procédé selon la revendication 1, la production d'énergie électrique au moyen d'une batterie à flux au vanadium ayant lieu en utilisant des électrolytes avec un vanadium de valeur différente.

3. Procédé selon l'une quelconque des revendications précédentes, le procédé comprenant une régulation des moteurs électriques (2a,2b,2c,2d) selon la sollicitation respective du véhicule automobile.

4. Procédé selon la revendication 3, le procédé comprenant une régulation séparée des moteurs électriques individuels (2a,2b,2c,2d).

5. Procédé selon l'une quelconque des revendications précédentes, le procédé comprenant une mise en mémoire tampon des variations entre la production d'énergie électrique et le besoin en courant des moteurs électriques par le biais d'un système d'accumulation d'énergie supplémentaire (4), notamment une batterie ou un accumulateur.

6. Procédé selon l'une quelconque des revendications précédentes, le procédé comprenant une conversion de l'énergie cinétique en énergie excédentaire électrique lors du freinage du véhicule automobile, ainsi qu'un accumulateur d'énergie excédentaire électrique et une mise en oeuvre ultérieure de l'énergie excédentaire électrique pour l'entraînement du véhicule automobile.

7. Procédé selon l'une quelconque des revendications précédentes, le procédé comprenant un échange de l'électrolyte consommé de la batterie à flux (1) par un électrolyte ionisé et/ou une ionisation de l'électrolyte consommé au moyen d'un dispositif de charge (6).

8. Système d'entraînement pour l'entraînement individuel de véhicules automobiles, par exemple de véhicules automobiles de tourisme et de poids lourds, le système d'entraînement comprenant :
- un dispositif de production d'énergie électrique pour l'entraînement du véhicule automobile, s'agissant d'une batterie à flux (1) en ce qui concerne le dispositif,
- un moteur électrique séparé (2a,2b,2c,2d) pour entraîner respectivement chaque roue, les moteurs électriques étant reliés au dispositif pour la production d'énergie électrique,
**caractérisé par**
- une batterie de démarrage séparée pour l'alimentation provisoire des moteurs électriques jusqu'à ce que la batterie à flux atteigne sa capacité de puissance complète.

9. Système d'entraînement selon la revendication 8, la batterie à flux (1) comprenant une batterie à flux au vanadium avec un vanadium de valeur différente.

10. Système d' entraînement selon la revendication 8 ou la revendication 9, le système d'entraînement comprenant un dispositif de régulation électronique (3a,3b,3c,3d) pour la régulation séparée des moteurs électriques (2a,2b,2c,2d) en fonction de la sollicitation respective du véhicule automobile.

11. Système d'entraînement selon l'une quelconque des revendications 8 à 10, le système d'entraînement comprenant un système d'accumulation d'énergie supplémentaire (4), notamment une batterie ou un accumulateur, pour la mise en mémoire tampon des variations entre la variation d'énergie électrique et le besoin en courant des moteurs électriques.

12. Système d'entraînement selon l'une quelconque des revendications 8 à 11, le système d'entraînement étant conçu pour la conversion de l'énergie cinétique en énergie excédentaire électrique lors du freinage du véhicule automobile ainsi que l'accumulation de l'énergie excédentaire électrique et pour une mise en oeuvre ultérieure de l'énergie excédentaire électrique pour l'entraînement du véhicule automobile.

13. Système d'entraînement selon l'une quelconque des revendications 8 à 12, le système d'entraînement comprenant un dispositif d'échange d'électrolyte (7) pour l'échange de l'électrolyte consommé et/ou un dispositif de charge (6) pour ionisation de l'électrolyte consommé.
